# EUROPEAN PATENT APPLICATION

(11) **EP 4 148 621 A1**
(43) Date of publication of application: **15.03.2023**
(21) Application number: 21803513.7
(22) Date of filing: 08.05.2021
(51) Int. Cl.: G06K 9/62, G06T 3/60

(54) **METHOD AND APPARATUS FOR GENERATING REFERENCE DATA**

(30) Priority: 09.05.2020 CN 202010388108
(71) Applicant: Hangzhou Hikvision Digital Technology Co., Ltd., Hangzhou, Zhejiang 310051 (CN)
(72) Inventor: ZHANG, Jing, Hangzhou, Zhejiang 310051 (CN); CHEN, Jie, Hangzhou, Zhejiang 310051 (CN); CHEN, Yiwei, Hangzhou, Zhejiang 310051 (CN); REN, Lijin, Hangzhou, Zhejiang 310051 (CN)
(74) Representative: Epping - Hermann - Fischer
(86) International application number: PCT/CN2021/092433
(87) International publication number: WO 2021/227995

(57) **Abstract**

The present application discloses a method and an apparatus for generating reference data, which belongs to the field of image processing. The method comprises: acquiring a sample image, wherein the sample image includes a target object (101); acquiring coordinate values of respective marking points in the sample image that mark the target object, wherein a polygon image with the respective marking points as vertexes includes an image of the target object (102); generating reference data corresponding to the sample image based on the coordinate values of the respective marking points in the sample image (103). With the present application, by acquiring the coordinate values corresponding to the marking points used to mark the target object in the sample image, the reference data corresponding to the sample image is automatically generated according to the coordinate values corresponding to the marking points, which simplifies the operation of acquiring the reference data and can improve the efficiency of acquiring the reference data.

## Description

The present application claims the priority to a Chinese patent application No. 202010388108.8, filed with the China National Intellectual Property Administration on May 09, 2020 and entitled "Method and apparatus for generating reference data", which is incorporated herein by reference in its entirety.

### Technical Field

The present application relates to the field of image processing, in particular to a method and apparatus for generating reference data.

### Background

With the development of artificial intelligence, the application of image recognition, character recognition and other technologies is more and more extensive. Image recognition, character recognition and other technologies can be realized through corresponding machine learning models. However, before using these machine learning models, it is necessary to obtain a large number of sample images and corresponding reference data to train the machine learning model. That is, after inputting the sample images into the machine learning model, output values of the machine learning model are obtained, the parameters in the machine learning model are adjusted by the differences between the output values and the input sample images. For example, the sample images used to train the object recognition model can be sample images containing the target object, and the target needs to be manually marked in the sample image to obtain the reference data.

In the process of realizing the present application, the inventor finds that the prior art has at least the following problems:
The training of machine learning model requires a large number of sample images and corresponding reference data. However, the operation of acquiring the reference data corresponding to the sample images in the prior art is too cumbersome, resulting in low efficiency of acquiring reference data.

### Summary

The embodiments of the application provide a method and apparatus for generating reference data, which can improve the efficiency of acquiring reference data. The technical solutions are as follows:
On the one hand, there is provided a method for generating reference data, which includes:
acquiring a sample image, wherein the sample image includes a target object;
acquiring coordinate values of respective marking points in the sample image that mark the target object, wherein a polygon image with the respective marking points as vertexes includes an image of the target object;
generating reference data corresponding to the sample image based on the coordinate values of the respective marking points in the sample image.

Optionally, generating reference data corresponding to the sample image based on the coordinate values of the respective marking points in the sample image, includes:
arranging the coordinate values of the respective marking points in the sample image according to a marking sequence of marking points, to form the reference data corresponding to the sample image.

Optionally, generating the reference data corresponding to the sample image based on the coordinate values of the respective marking points in the sample image, includes:
intercepting a polygon image with the respective marking points as vertexes from the sample image based on the coordinate values of the respective marking points in the sample image;
taking each side of the polygon image as a horizontal bottom side, rotating the polygon image, to obtain multiple rotated polygon images;
displaying multiple rotated polygon images;
when receiving a corresponding selection instruction of a target polygon image among the multiple rotated polygon images, arranging the coordinate values of the respective marking points in the target polygon image in the sample image based on a preset coordinate value arrangement manner information, to form the reference data corresponding to the sample image, wherein, the coordinate value arrangement manner information is used to indicate how to arrange coordinate values of the marking points in different orientations in the target polygon image.

Optionally, the coordinate value arrangement manner information includes starting orientation information and orientation arrangement information, wherein the starting orientation information is used to indicate orientation information of a target marking point corresponding to a first coordinate value in the target polygon image, and the orientation arrangement information is used to indicate arrangement manner information of a marking point corresponding to a coordinate value after the first coordinate value in the target polygon image, the orientation arrangement information comprises clockwise or counterclockwise.

Optionally, arranging the coordinate values of the respective marking points in the sample image based on a preset coordinate value arrangement manner information, to form the reference data corresponding to the sample image, includes:
determining a target marking point among the respective marking points in the target polygon image based on the starting orientation information;
in the target polygon image, taking the target marking point as a starting point, acquiring coordinate values of the respective marking points one by one according to the orientation arrangement information, and arranging the coordinate values according to an acquisition sequence to form the reference data corresponding to the sample image.

Optionally, determining a target marking point in the respective marking points in the target polygon image based on the starting orientation information, includes:
determining a leftmost marking point (s) among the respective marking points of the target polygon image;
if there is one leftmost marking point, determining the leftmost marking point as a starting marking point;
if there are multiple leftmost marking points, determining an uppermost marking point in the leftmost marking points as a starting marking point.

Optionally, the coordinate value arrangement manner information includes an orientation of a marking point corresponding to a coordinate value in the target polygon image.

On the other hand, there is provided an apparatus for generating reference data, which includes:
a first acquiring module, configured for acquiring a sample image, wherein the sample image includes a target object;
a second acquiring module, configured for acquiring coordinate values of respective marking points in the sample image that mark the target object, wherein a polygon image with the respective marking points as vertexes comprises an image of the target object;
a generating module, configured for generating the reference data corresponding to the sample image based on the coordinate values of the respective marking points in the sample image.

Optionally, the generating module is configured for:
arranging the coordinate values of the respective marking points in the sample image according to a marking sequence of the marking points, to form the reference data corresponding to the sample image.

Optionally, the generating module is configured for:
intercepting a polygon image with the respective marking points as vertexes from the sample image based on the coordinate values of the respective marking points in the sample image;
taking each side of the polygon image as a horizontal bottom side, rotating the polygon image, to obtain multiple rotated polygon images;
displaying multiple rotated polygon images;
when receiving a corresponding selection instruction of a target polygon image among the multiple rotated polygon images, arranging the coordinate values of the respective marking points in the target polygon image in the sample image based on a preset coordinate value arrangement manner information, to form the reference data corresponding to the sample image, wherein, the coordinate value arrangement manner information is used to indicate how to arrange coordinate values of the marking points in different orientations in the target polygon image.

Optionally, the coordinate value arrangement manner information includes starting orientation information and orientation arrangement information, wherein the starting orientation information is used to indicate orientation information of a target marking point corresponding to a first coordinate value in the target polygon image, and the orientation arrangement information is used to indicate arrangement manner information of a marking point corresponding to a coordinate value after the first coordinate value in the target polygon image, the orientation arrangement information comprises clockwise or counterclockwise.

Optionally, the generating module is configured for:
determining a target marking point in the respective marking points in the target polygon image based on the starting orientation information;
in the target polygon image, taking the target marking point as a starting point, acquiring coordinate values of the respective marking points one by one according to the orientation arrangement information, and arranging the coordinate values according to an acquisition sequence to form the reference data corresponding to the sample image.

Optionally, the generating module is configured for:
determining a leftmost marking point (s) among the respective marking points of the target polygon image;
if there is one leftmost marking point, determining the leftmost marking point as a starting marking point;
if there are multiple leftmost marking points, determining an uppermost marking point in the leftmost marking points as a starting marking point.

Optionally, the coordinate value arrangement manner information includes an orientation of a marking point corresponding to a coordinate value in the target polygon image.

On the other hand, there is provided a computer device, which includes a processor and a memory, wherein the memory stores at least one instruction, which is loaded and executed by the processor to realize an operation performed by the method of generating reference data described above.

On the other hand, there is provided a computer-readable storage medium, the computer-readable storage medium stores at least one instruction, which is loaded and executed by the processor to realize an operation performed by the method for generating reference data described above.

The beneficial effects of the technical solution provided by the embodiments of the application are:
By acquiring the coordinate values corresponding to the marking points used to mark the target object in the sample image, the reference data corresponding to the sample image is automatically generated according to the coordinate values corresponding to the marking points. With this application, in case that the technician marks the marking points corresponding to the target object in the sample image, then the reference data corresponding to the sample image can be obtained, which simplifies the operation of acquiring the reference data and improves the efficiency of acquiring the reference data.

### Brief Description of the Drawings

In order to more clearly describe the technical solution of the embodiments of the application or of the prior art, drawings needed in the embodiments and the prior art will be briefly described below. Obviously, the drawings described below are for only some embodiments of the present application, one of ordinary skills in the art can also obtain other drawings based on these drawings without any creative efforts.
FIG. 1 is a flow diagram of a method for generating reference data provided by an embodiment of the present application;
FIG. 2 is a flow diagram of a method for generating reference data provided by an embodiment of the present application;
FIG. 3 is a schematic diagram of a method for generating reference data provided by an embodiment of the present application;
FIG. 4 is a schematic diagram of a method for generating reference data provided by an embodiment of the present application;
FIG. 5 is a schematic diagram of a method for generating reference data provided by an embodiment of the present application;
FIG. 6 is a schematic diagram of a method for generating reference data provided by an embodiment of the present application;
FIG. 7 is a schematic structural diagram of an apparatus for generating reference data provided by an embodiment of the present application;
FIG. 8 is a block diagram of a terminal structure provided by an embodiment of the present application.

### Detailed Description

In order to make the purpose, technical solution and advantages of the present application clearer, the implementation of the present application will be further described in detail in combination with the drawings.

The method for generating reference data provided by the present application can be realized by the terminal. The terminal can run an application program for image processing, such as an image marking application program. The terminal has a display screen, which can display images, and has a processor and a memory, which can process and display images and other data.

Before training machine learning models such as character recognition models and image recognition models, it is necessary to acquire a large number of sample images and corresponding reference data. The reference data is marking point information corresponding to a polygon bounding box of the target object or target character segment in the sample image, the marking points are vertexes of the polygon bounding box. The marking point information is the coordinate values of each of vertexes of the polygon bounding box in the coordinate system corresponding to the sample image. Technicians can manually mark the target object in the sample image by using the image marking application program to obtain the marking point information corresponding to the sample image. That is, technicians need to import the sample image into the image marking application program first, and the image marking application program can display the imported sample image, and then the technicians can click around the target object in the sample image. Each point clicked by technicians in the sample image is a marking point, and the polygon with multiple marking points as vertexes can bound the target object in the sample image, for example, a person, a car, or an animal, etc., the image marking application program acquires the coordinate values of each of marking points in the coordinate system corresponding to the sample image, and then outputs the coordinate values of the marking points corresponding to the sample image, wherein the coordinate values of the marking points output are reference data corresponding to the sample image. The method for generating reference data provided in this application can automatically arrange the coordinate values of the marking points corresponding to the output sample image, and compose the coordinate values of the marking points into the reference data for training the machine learning model according to a preset sequence.

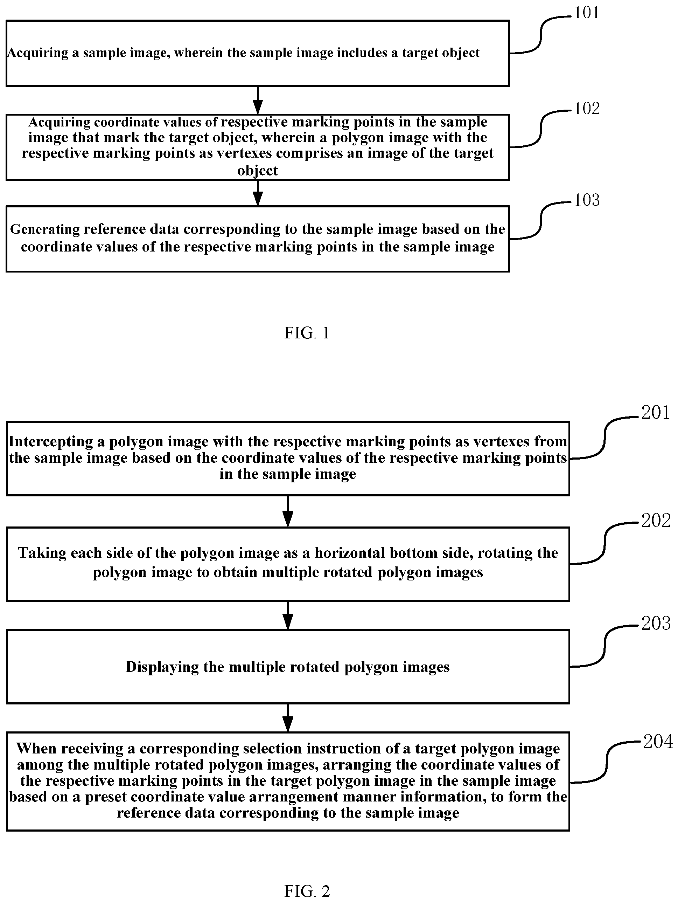

FIG. 1 is a flow diagram of a method for generating reference data provided by an embodiment of the present application. Referring to FIG. 1, the embodiment includes the following steps.

Step 101, acquiring a sample image.

Wherein the sample image includes a target object. The sample image can be a large number of images containing the target object collected by technicians through the network. The image of the target object can be the image of a real object such as a person, a car, or an animal, etc., or it can be the image of a character, a symbol, etc. When technicians determine the corresponding target object according to actual requirements, for example, if technicians need to acquire reference data for training the character recognition model, the corresponding target object can be a character, a symbol, etc. If technicians need to train an object classification model, the corresponding target object can be a person, a car, an animal, etc.

Step 102, acquiring coordinate values of respective marking points in the sample image that mark the target object.

Wherein a polygon image with the respective marking points as vertexes comprises an image of the target object.

In the implementation, technicians can import the sample image into the image marking application program, and mark the target object in the sample image, that is, click around the target object in the sample image to obtain the marking points, and the polygon with multiple marking points as vertexes can bound the target object in the sample image. The image marking application program can acquire the coordinate values of the marking points in the sample image coordinate system, wherein the sample image coordinate system can be a coordinate system established with the upper left corner of the sample image as an origin.

Step 103, generating reference data corresponding to the sample image based on the coordinate values of the respective marking points in the sample image.

In the implementation, after the technician finishes marking the target object of the sample image, the image marking application program can form the corresponding reference data of the sample image from the acquired coordinate values of each of points marked by the technician.

In the actual training process of the machine learning model, the marked sample image can be input into the model being trained, and the model being trained outputs multiple target positions identified from the target objects in the sample image, wherein the number of target positions can be the same as the number of points marked by technicians in the sample image. Then a training function (loss function) can be constructed from the coordinate values of the respective target positions in the image and the coordinate values in the reference data, to train the model being trained. Wherein, if the coordinate values in the reference data have a uniform arrangement sequence, the recognition accuracy of the machine learning model after training can be improved. That is, the arrangement sequence of the respective coordinate values in the reference data can be set in advance, the model being trained can output the coordinate values of the respective target positions in the same arrangement sequence. In this way, the difference between the coordinate values of each target position and the coordinate values in the corresponding reference data can be determined in the training function according to the preset arrangement sequence, which can improve the accuracy of the training machine learning model. For example, technicians can bound the target object by marking four marking points in the sample image, and the four marking points can form 24 kinds of arrangement sequence. Technicians can form the corresponding reference data by arranging the marking points in each sample image in a unified arrangement sequence, for example, form the reference data by arranging the marking points in the sample image according to their orientation (upper left, upper right, lower right, and lower left) In this way, after determining the arrangement sequence of the respective coordinate points in the reference data, the influence of different arrangement sequence on the accuracy of machine learning model can be reduced.

In another possible solution, each marking point can also be arranged according to the sequence in which it is marked to obtain the corresponding reference data. The corresponding processing is as follows: arranging the coordinate values of the respective marking points in the sample image according to the marking sequence of the marking points to form the corresponding reference data of the sample image.

In implementation, technicians can mark the sample image in a uniform marking sequence, such as marking the target object in the sample image in a clockwise direction. The image marking application program can record the marking sequence of each marking point. For example, the marking sequence of each marking point can be determined by the corresponding marking time of each marking point, and then the reference data corresponding to the sample image can be formed according to the marking sequence of the respective marking points.

In another possible solution, the corresponding reference data can be determined according to the orientation of each marking point relative to the target object. FIG. 2 is a flow diagram of a method for generating reference data provided by an embodiment of the present application. Referring to FIG. 2, the embodiment includes the following steps.

Step 201, intercepting a polygon image with the respective marking points as vertexes from the sample image based on the coordinate values of the respective marking points in the sample image.

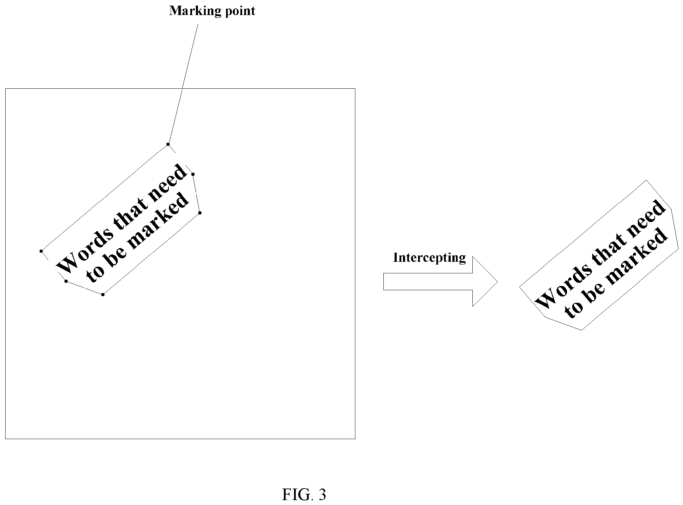

In the implementation, after obtaining the coordinate values of the marking points in the sample image coordinate system, the image marking application program can intercept a polygon image bounded by multiple marking points as vertexes from the sample image according to the coordinate values corresponding to the respective marking points. As shown in FIG. 3, after the technician marks the characters in the sample image, the polygon image that bounds the characters in the sample image is intercepted from the sample image.

Step 202, taking each side of the polygon image as a horizontal bottom side, rotating the polygon image to obtain multiple rotated polygon images.

In the implementation, after the image marking application program intercepts the polygon image bounded by multiple marking points as vertexes from the sample image, each side of the polygon image can be selected as a horizontal bottom side to rotate the polygon image so that the selected side is located below the polygon image and is in a horizontal state. In this way, multiple rotated polygon images can be obtained. For example, a polygon image has five sides, if each side is taken as a horizontal bottom side, then five polygon images with different rotation angles can be obtained.

Step 203, displaying multiple rotated polygon images.

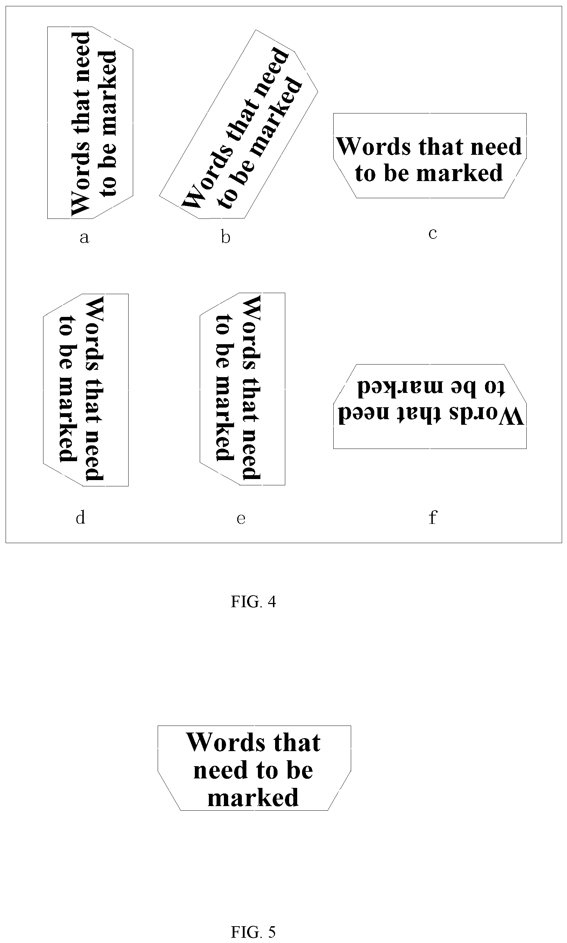

In the implementation, the image marking application program can display multiple polygon images with different rotation angles. As shown in FIG. 4, which shows multiple rotated polygon images bounding the characters in the sample image displayed by the image marking application program.

Step 204, when receiving a corresponding selection instruction of a target polygon image among the multiple rotated polygon images, arranging the coordinate values of the respective marking points in the target polygon image in the sample image based on a preset coordinate value arrangement manner information, to form the reference data corresponding to the sample image.

Wherein, the coordinate value arrangement manner information is used to indicate how to arrange coordinate values of the marking points in different orientations in the target polygon image.

In the implementation, the technician can select a target polygon image from the multiple polygon images displayed in the image marking application program, wherein the target object included in the target polygon image is horizontally displayed. The target polygon image can be as shown in FIG. 5, which is the target polygon image among the multiple polygon images in FIG. 4. For example, the target polygon image can be clicked to complete the selection of the target polygon image. After the technician selects the target polygon image, the image marking application program can arrange the coordinate values of the marking points in the target polygon image can be arranged according to a preset coordinate value arrangement manner information when it receives a selection command with the corresponding identification of the target polygon image. Wherein, the marking points in the target polygon image are the vertexes of the target polygon image, and the corresponding coordinate values are the coordinate values of the vertexes of the target polygon image in the sample image coordinate system.

In one implementation, the coordinate value arrangement manner information includes an orientation of a marking point corresponding to a coordinate value in the target polygon image.

In the implementation, the coordinate value arrangement manner information includes the arrangement sequence of the marking points in each of orientations of the target polygon image, and the sequence of the coordinate values in the reference data corresponds to the arrangement sequence of the marking points in each of orientations of the target polygon image. That is, a first coordinate value in the reference data is a coordinate values of a marking point corresponding to a first orientation of the target polygon image, second coordinate values in the reference data are coordinate values of the marking point corresponding to a second orientation of the target polygon image, and so on. Each coordinate value in the reference data is a coordinate value of a marking point corresponding to an orientation of the target polygon image.

The technician can preset the number of marking points in the sample image, and then sort the coordinate values corresponding to the marking points according to the preset coordinate value arrangement manner information. The corresponding processing is as follows: based on a preset number of marking points and a preset coordinate value arrangement manner information, determining the target coordinate value arrangement manner information corresponding to the number of marking points of the target object in the sample image; based on the target coordinate value arrangement manner information, arranging the coordinate values of the respective marking points in the target polygon image in the sample image to form the reference data corresponding to the sample image.

In the implementation, the technician can set the number of marking points in the sample image. The coordinate value arrangement manner information can be the orientation sequence information of the respective marking points stored in advance. After determining the marking points, the technician can determine the arrangement sequence of marking points in each orientation of the target polygon image according to the orientation sequence information of the respective marking points stored in advance. For example, if there are four marking points in the sample image, the corresponding polygon image is a rectangle, and the orientation sequence included in the coordinate value arrangement manner information is top left, top right, bottom right, and bottom left, the coordinate values of the marking point at the top left corner of the corresponding target polygon image will be taken as the first coordinate value, the coordinate values of the marking points in the target polygon image are sorted according to the orientation sequence in the coordinate value arrangement manner information, and the sorted coordinate values are taken as the reference data corresponding to the sample image. In addition, the coordinate value arrangement manner information can be orientation sequence calculation information, for example, the coordinate values corresponding to the geometric center of the target polygon image can be calculated according to the coordinate values of multiple marking points, and then on the left side of the horizontal direction of the geometric center of the polygon image, the coordinate values corresponding to the respective marking points are sorted in a clockwise sequence, and the sorted coordinate values are taken as the reference data corresponding to the sample image. In addition, the arrangement sequence of the respective marking points of the target polygon image can also be determined through a preset sorting algorithm. For example, the coordinate values of the marking points in the target polygon image are obtained, and then the coordinate values of the respective marking points are sorted in clockwise or counterclockwise according to the preset sorting algorithm, and the coordinate values of the respective marking points after sorting are determined as the corresponding reference data of the sample image.

In another implementation, the coordinate value arrangement manner information includes starting orientation information and orientation arrangement information. The starting orientation information is used to indicate orientation information of a target marking point corresponding to a first coordinate value in the target polygon image, and the orientation arrangement information is used to indicate arrangement manner information of a marking point corresponding to a coordinate value after the first coordinate value in the target polygon image, the orientation arrangement information includes clockwise or counterclockwise.

In the implementation, the polygon image composed of the marking points in the sample image may not be an equilateral polygon, and the coordinate values of multiple marking points corresponding to the polygon image cannot be sorted only by the orientation sequence. Therefore, the coordinate value arrangement manner information can also include the starting orientation information and the orientation arrangement information. The image marking application program can determine the first coordinate value in the reference data from the coordinate values of the respective marking points in the polygon image according to the starting orientation information. Then, after determining the first coordinate value in the reference data, a coordinate value after the first coordinate value can be determined among the coordinate values of the respective marking points in the polygon image according to the orientation arrangement information. For example, coordinate value corresponding to each marking point can be determined in the polygon image in a clockwise or counterclockwise direction.

Optionally, among the coordinate values of the respective marking points in the target polygon image, the first coordinate value in the reference data can be determined, and then the reference data can be determined according to the coordinate value arrangement manner information. The corresponding processing is as follows: determining a target marking point among the respective marking points in the target polygon image based on the starting orientation information; in the target polygon image, taking the target marking point as a starting point, acquiring coordinate values of the respective marking points one by one according to the orientation arrangement information, and arranging the coordinate values according to an acquisition sequence to form the reference data corresponding to the sample image.

In the implementation, the image marking application program can determine the target marking point among multiple marking points in the target polygon image according to the starting orientation information, wherein, the coordinate value corresponding to the target marking point is the first coordinate value in the reference data. Then the target marking point can be taken as the starting point in the target polygon image, and the coordinate value of each marking point in the sample image can be obtained in a clockwise or counterclockwise direction, the coordinate values of the marking points in the target polygon image are sorted in the sequence of the coordinate values of the acquired marking points, and then the sorted coordinate values form the reference data corresponding to the sample image.

Optionally, a leftmost marking point (s) among the respective marking points of the target polygon image is determined; if there is one leftmost marking point, the leftmost marking point is determined as a starting marking point; if there are multiple leftmost marking points, an uppermost marking point among the multiple leftmost dimension points is determined as the starting marking point.

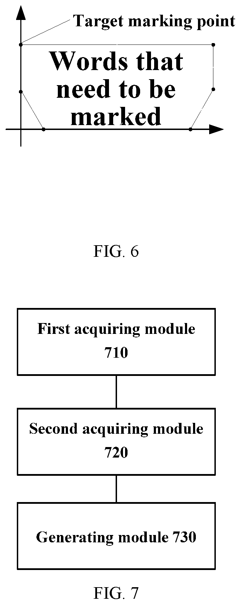

In the implementation, the horizontal bottom side of the target polygon image can be taken as an abscissa axis, and the right is taken as the positive direction to establish a coordinate system, as shown in FIG. 6. The marking point with the smallest abscissa value is the leftmost marking point in the target polygon image. If there is only one marking point with the smallest abscissa value, the marking point with the smallest abscissa value can be used as the target marking point. When there are multiple marking points with the smallest abscissa value, a marking point with the farthest distance from the abscissa axis can be determined from the multiple marking points with the smallest abscissa value, and the marking point with the farthest distance from the abscissa axis is taken as the target marking point.

In the embodiment of the present application, by acquiring the coordinate values corresponding to the marking points used to mark the target object in the sample image, the reference data corresponding to the sample image is automatically generated according to the coordinate values corresponding to the marking points, which simplifies the operation of acquiring the reference data and can improve the efficiency of acquiring the reference data. In addition, with the present application, the polygon image with the respective marking points as vertexes can be intercepted from the sample image, the polygon image can be rotated and displayed, the target polygon image can be selected from the multiple rotated polygon images, and then the coordinate values corresponding to the marking points can be sorted according to the orientation of the respective marking points in the target polygon image, so that the reference data composed in a unified sequence can be obtained, thereby improving the accuracy of machine learning model after training.

All the above optional technical solutions can be arbitrarily combined to form the optional embodiments of the present application, which will not be repeated here.

FIG. 7 is an apparatus for generating reference data provided by an embodiment of the present application, which can be a terminal in the above embodiment. As shown in FIG. 7, the apparatus includes:
a first acquiring module 710, which is configured for acquiring a sample image, wherein the sample image includes a target object;
a second acquiring module 720, which is configured for acquiring coordinate values of respective marking points in the sample image that mark the target object, wherein a polygon image with the respective marking points as vertexes comprises an image of the target object;
a generating module 730, which is configured for generating reference data corresponding to the sample image based on the coordinate values of the respective marking points in the sample image.

Optionally, the generating module 730 is configured for:
arranging the coordinate values of the respective marking points in the sample image according to a marking sequence of marking points, to form the reference data corresponding to the sample image.

Optionally, the generating module 730 is configured for:
intercepting a polygon image with the respective marking points as vertexes from the sample image based on the coordinate values of the respective marking points in the sample image;
taking each side of the polygon image as a horizontal bottom side, rotating the polygon image, to obtain multiple rotated polygon images;
displaying multiple rotated polygon images;
when receiving a corresponding selection instruction of a target polygon image among the multiple rotated polygon images, arranging the coordinate values of the respective marking points in the target polygon image in the sample image based on a preset coordinate value arrangement manner information, to form the reference data corresponding to the sample image, wherein, the coordinate value arrangement manner information is used to indicate how to arrange coordinate values of the marking points in different orientations in the target polygon image.

Optionally, the coordinate value arrangement manner information comprises starting orientation information and orientation arrangement information, wherein the starting orientation information is used to indicate orientation information of a target marking point corresponding to a first coordinate value in the target polygon image, and the orientation arrangement information is used to indicate arrangement manner information of a marking point corresponding to a coordinate value after the first coordinate value in the target polygon image, the orientation arrangement information comprises clockwise or counterclockwise.

Optionally, the generating module 730 is configured for:
determining a target marking point in the respective marking points in the target polygon image based on the starting orientation information;
in the target polygon image, taking the target marking point as a starting point, acquiring coordinate values of the respective marking points one by one according to the orientation arrangement information, and arranging the coordinate values according to an acquisition sequence to form the reference data corresponding to the sample image.

Optionally, the generating module 730 is configured for:
determining a leftmost marking point (s) among the respective marking points of the target polygon image;
if there is one leftmost marking point, determining the leftmost marking point as a starting marking point;
if there are multiple leftmost marking points, determining an uppermost marking point in the leftmost marking points as the starting marking point.

Optionally, the coordinate value arrangement manner information includes an orientation of a marking point corresponding to a coordinate value in the target polygon image.

It should be noted that when generating the reference data, the apparatus for generating the reference data provided by the above embodiments only illustrates the division of the above functional modules. In practical applications, the above functional allocation can be completed by different functional modules according to requirements, that is, the internal structure of the device is divided into different functional modules to complete all or part of the functions described above. In addition, the apparatus for generating reference data provided by the above embodiments belongs to the same idea as the method embodiment for generating reference data, and the specific realization process is detailed in the method embodiments, which will not be repeated here.

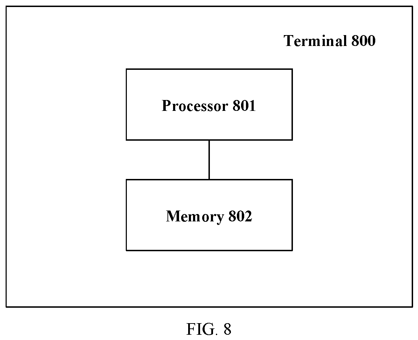

FIG. 8 shows a block diagram of a structure of a terminal 800 provided by an exemplary embodiment of the present application. The terminal 800 may be a smart phone, tablet, laptop or desktop computer. The terminal 800 may also be referred to as user device, portable terminal, laptop terminal, desktop terminal and other names.

Generally, the terminal 800 includes a processor 801 and a memory 802.

The processor 801 may include one or more processing cores, such as a 4-core processor, an 8-core processor, and the like. The processor 801 can be implemented in at least one hardware form of DSP (Digital Signal Processing), FPGA (Field Programmable Gate Array) and PLA (Programmable Logic Array). The processor 801 may also include a main processor and a coprocessor. The main processor is a processor used to process data in a wake-up state, also known as a CPU (Central Processing Unit); the coprocessor is a low-power processor for processing data in a standby state. In some embodiments, the processor 801 may be integrated with a GPU (Graphics Processing Unit), which is used to render and draw the content to be displayed on a display screen. In some embodiments, the processor 801 may also include an AI (Artificial Intelligence) processor, which is used for processing computing operations related to machine learning.

The memory 802 may include one or more computer-readable storage medium, which may be non-transient. The memory 802 may also include a high-speed random access memory, ang a non-volatile memory, such as one or more disk storage devices, flash memory storage devices. In some embodiments, a non-transient computer-readable storage medium in the memory 802 is used to store at least one instruction that is executed by the processor 801 to implement the method for generating reference data provided by the method embodiment of the present application.

In the exemplary embodiment, there is provided a computer-readable storage medium, such as a memory including instructions, which can be executed by a processor in the terminal to complete the method for generating reference data in the above embodiment. The computer-readable storage medium may be non-transient. For example, the computer-readable storage medium can be ROM (Read Only Memory), RAM (Random Access Memory), CD-ROM, tape, floppy disk, optical data storage device, etc.

It will be understood by those of ordinary skills in the art that all or some of the steps in the embodiments described above may be accomplished by hardware, or can be accomplished by instructing relevant hardware through programs, and the program may be stored in a computer-readable storage medium, which can be a read-only memory, a disk or an optical disk, etc.

The description is only for preferred embodiments of the present application, and embodiments are not so limited. Any modifications, substitutions, improvements, etc., which are made within the spirit and principles of the present application, will fall into the protection scope of the present application.

## Claims

1. A method for generating reference data, comprising:
acquiring a sample image, wherein the sample image comprises a target object;
acquiring coordinate values of respective marking points in the sample image that mark the target object, wherein a polygon image with the respective marking points as vertexes comprises an image of the target object;
generating reference data corresponding to the sample image based on the coordinate values of the respective marking points in the sample image.

2. The method of claim 1, wherein generating reference data corresponding to the sample image based on the coordinate values of the respective marking points in the sample image, comprises:
arranging the coordinate values of the respective marking points in the sample image according to a marking sequence of the marking points, to form the reference data corresponding to the sample image.

3. The method of claim 1, wherein generating the reference data corresponding to the sample image based on the coordinate values of the respective marking points in the sample image, comprises:
intercepting a polygon image with the respective marking points as vertexes from the sample image based on the coordinate values of the respective marking points in the sample image;
taking each side of the polygon image as a horizontal bottom side, rotating the polygon image to obtain multiple rotated polygon images;
displaying the multiple rotated polygon images;
when receiving a corresponding selection instruction of a target polygon image among the multiple rotated polygon images, arranging the coordinate values of the respective marking points in the target polygon image in the sample image based on a preset coordinate value arrangement manner information, to form the reference data corresponding to the sample image, wherein, the coordinate value arrangement manner information is used to indicate how to arrange coordinate values of the marking points in different orientations in the target polygon image.

4. The method of claim 3, wherein the coordinate value arrangement manner information comprises starting orientation information and orientation arrangement information, wherein the starting orientation information is used to indicate orientation information of a target marking point corresponding to a first coordinate value in the target polygon image, and the orientation arrangement information is used to indicate arrangement manner information of a marking point corresponding to a coordinate value after the first coordinate value in the target polygon image, the orientation arrangement information comprises clockwise or counterclockwise.

5. The method of claim 4, wherein arranging the coordinate values of the respective marking points in the target polygon image in the sample image based on a preset coordinate value arrangement manner information, to form the reference data corresponding to the sample image, comprises:
determining a target marking point among the respective marking points in the target polygon image based on the starting orientation information;
in the target polygon image, taking the target marking point as a starting point, acquiring coordinate values of the respective marking points one by one according to the orientation arrangement information, and arranging the coordinate values according to an acquisition sequence to form the reference data corresponding to the sample image.

6. The method of claim 5, wherein determining a target marking point in the respective marking points in the target polygon image based on the starting orientation information, comprises:
determining a leftmost marking point (s) among the respective marking points of the target polygon image;
if there is one leftmost marking point, determining the leftmost marking point as the target marking point;
if there are multiple leftmost marking points, determining an uppermost marking point in the leftmost marking points as the target marking point.

7. The method of claim 3, wherein the coordinate value arrangement manner information comprises an orientation of a marking point corresponding to a coordinate value in the target polygon image.

8. An apparatus for generating reference data, comprising:
a first acquiring module, configured for acquiring a sample image, wherein the sample image comprises a target object;
a second acquiring module, configured for acquiring coordinate values of respective marking points in the sample image that mark the target object, wherein a polygon image with the respective marking points as vertexes comprises an image of the target object;
a generating module, configured for generating reference data corresponding to the sample image based on the coordinate values of the respective marking points in the sample image.

9. The apparatus of claim 8, wherein the generating module is configured for:
arranging the coordinate values of the respective marking points in the sample image according to a marking sequence of the marking points, to form the reference data corresponding to the sample image.

10. The apparatus of claim 8, wherein the generating module is configured for:
intercepting a polygon image with the respective marking points as vertexes from the sample image based on the coordinate values of the respective marking points in the sample image;
taking each side of the polygon image as a horizontal bottom side, rotating the polygon image to obtain multiple rotated polygon images;
displaying the multiple rotated polygon images;
when receiving a corresponding selection instruction of a target polygon image among the multiple rotated polygon images, arranging the coordinate values of the respective marking points in the target polygon image in the sample image based on a preset coordinate value arrangement manner information, to form the reference data corresponding to the sample image, wherein, the coordinate value arrangement manner information is used to indicate how to arrange coordinate values of the marking points in different orientations in the target polygon image.

11. The apparatus of claim 10, wherein the coordinate value arrangement manner information comprises starting orientation information and orientation arrangement information, wherein the starting orientation information is used to indicate orientation information of a target marking point corresponding to a first coordinate value in the target polygon image, and the orientation arrangement information is used to indicate arrangement manner information of a marking point corresponding to a coordinate value after the first coordinate value in the target polygon image, the orientation arrangement information comprises clockwise or counterclockwise.

12. The apparatus of claim 11, wherein the generating module is configured for:
determining a target marking point in the respective marking points in the target polygon image based on the starting orientation information;
in the target polygon image, taking the target marking point as a starting point, acquiring coordinate values of the respective marking points one by one according to the orientation arrangement information, and arranging the coordinate values according to an acquisition sequence to form the reference data corresponding to the sample image.

13. The apparatus of claim 12, wherein the generating module is configured for:
determining a leftmost marking point (s) among the respective marking points of the target polygon image;
if there is one leftmost marking point, determining the leftmost marking point as a starting marking point;
if there are multiple leftmost marking points, determining an uppermost marking point in the leftmost marking points as a starting marking point.

14. The apparatus of claim 8, wherein the coordinate value arrangement manner information comprises an orientation of a marking point corresponding to a coordinate value in the target polygon image.

15. A computer device, comprising a processor and a memory, wherein the memory stores at least one instruction, which is loaded and executed by the processor to realize an operation performed by the method for generating reference data according to any one of claims 1-7.

16. A computer-readable storage medium, storing at least one instruction, which is loaded and executed by the processor to realize an operation performed by the method for generating reference data according to any one of claims 1-7.
